# EUROPÄISCHE PATENTSCHRIFT

(11) **EP 4 155 141 B1**
(45) Veröffentlichungstag und Bekanntmachung des Hinweises auf die Patenterteilung: **30.10.2024**
(21) Anmeldenummer: 21198929.8
(22) Anmeldetag: 24.09.2021
(51) Int. Cl.: B60S 5/04, B60C 29/00, F16L 37/00, F04B 33/00, F16K 15/20

(54) **VERBINDUNGSVORRICHTUNG ZUM VERBINDEN EINES REIFENVENTILS EINES DRUCKLUFTREIFENS MIT EINER DRUCKLUFTQUELLE**
CONNECTING DEVICE FOR CONNECTING A PNEUMATIC TYRE INFLATION VALVE TO A COMPRESSED AIR SOURCE
DISPOSITIF DE LIAISON PERMETTANT DE RELIER UNE VALVE D'UN PNEU À UNE SOURCE D'AIR COMPRIMÉ

(43) Veröffentlichungstag der Anmeldung: 29.03.2023
(73) Patentinhaber: Mijnen, Wilfried, 7064 AP Silvolde (NL)
(72) Erfinder: Mijnen, Wilfried, 7064 AP Silvolde (NL)
(74) Vertreter: Uexküll & Stolberg

(56) Entgegenhaltungen:
- GB-A- 2 297 592
- KR-A- 20150 145 461
- US-A1- 2014 326 345
- US-A1- 2021 190 220

## Beschreibung

Die Erfindung betrifft eine Verbindungsvorrichtung zum Verbinden eines Reifenventils eines Druckluftreifens, insbesondere eines Fahrradreifens, mit einer Druckluftquelle, wobei das Reifenventil wahlweise ein Dunlopventil, ein Schraderventil oder ein Prestaventil ist, die jeweils einen Ventilschaft umfassen, in dem ein Ventilelement aufgenommen ist, das einen Lufteinlass zum Befüllen des Druckluftreifens definiert.

Reifenventile, beispielsweise am Schlauch einer Fahrradbereifung, dienen dem Befüllen eines Reifens mit Luft oder Gas. Als Reifenventil finden insbesondere drei Grundtypen Verwendung, das Dunlopventil, das Prestaventil (synonym auch Sclaverandventil oder französisches Ventil genannt) und das Schraderventil, welches auch als Autoventil bekannt ist.

Allen drei Ventiltypen ist gemein, dass sie einen länglichen Ventilschaft umfassen, in dem das Ventilelement angeordnet ist. Bei einem Dunlopventil umfasst der Ventilschaft häufig eine Überwurfschraube, um einen Ventileinsatz, der das Ventilelement aufweist, festzulegen. Das Ventilelement definiert den Lufteinlass, durch den die Druckluft durch das Ventil in den Reifen bzw. den Schlauch eingefüllt werden kann. Der Ventilschaft ist in der Regel an den eigentlichen Reifen, beziehungsweise an den Gummischlauch eines Fahrradreifens, anvulkanisiert. Das Dunlopventil zeichnet sich dadurch aus, dass das Ventilelement, das einen Lufteinlass zum Befüllen des Reifens definiert, durch den Luftdruck der Druckluftquelle betätigt wird. Häufig findet hierbei ein Ventileinsatz Verwendung, dessen unteres Ende aus einem verschlossenen Röhrchen mit seitlichem Luftloch besteht. Über das Röhrchen ist ein kurzer Gummischlauch gezogen, der durch Eigenspannung sowie insbesondere durch den Luftdruck des Reifens vor das Loch gepresst wird. Wird die Druckluftquelle, beispielsweise eine Fahrradpumpe, betätigt, erzeugt die Pumpe einen höheren Druck als im Reifen bereits vorhanden ist. Dadurch hebt sich der Gummischlauch vom Röhrchen ab und Luft kann in den Schlauch strömen. Eine andere Form des Dunlopventils ist unter dem Begriff Blitzventil bekannt. Dabei wurde der Gummischlauch gegen ein eingebautes Rückschlagventil ersetzt, was das Aufpumpen mit weniger Kraft ermöglicht. Andere Formen des Dunlopventils sind unter den Begriffen Automatikventil, Patentventil oder Automatikventil bekannt. Beim Prestaventil wird in der Regel als Ventilelement ein Rückschlagventil verwendet, das mit einem Gewindestößel verbunden ist, der über das freie Ende des Ventilschaftes hinausragt. Auf dem Stößel sitzt eine Mutter, die zum Befüllen des Reifens gelockert werden muss, damit das Rückschlagventil in eine Offenstellung geschaltet werden kann. Gegebenenfalls ist es notwendig, den Ventilstößel anzustoßen, um das Ventilelement von seinem Ventilsitz zu lösen. Dunlop- und Prestaventile findet insbesondere als Fahrradventile Verwendung. Das Schraderventil, das insbesondere als KFZ-Ventil oder als Reifenventil bei Mountainbikes Verwendung findet, zeichnet sich dadurch aus, dass der Ventilschaft in der Regel breiter ist als bei Dunlop- oder Prestaventilen, also einen größeren Außendurchmesser aufweist. Das Schraderventil verfügt über einen in dem Ventilschaft sitzenden Stift oder einen Ventilstößel zum Betätigen des Ventilelements. Das Ventil ist beim Befüllen des Reifens in Offenstellung zu halten. Entsprechende Pumpenköpfe sind daher so gestaltet, dass sie beim Aufsetzen des Pumpenkopfes auf den Ventilschaft den Ventilstößel herunterdrücken. Bei allen drei Ventiltypen ist der Ventilschaft in der Regel mit einem Außengewinde versehen.

Die unterschiedlichen Bauweisen der drei Ventiltypen machen jedoch unterschiedliche Pumpenköpfe erforderlich. Beispielsweise ist die Öffnung, bzw. die Aufnahmeöffnung, in die der Ventilschaft gesteckt wird, in dem Kopf einer Fahrradpumpe für ein Dunlopventil nicht dazu geeignet, dass auch ein Schraderventil in die Öffnung des Pumpenkopfes gesteckt werden kann, weil der Ventilschaft eines Schraderventils einen größeren Außendurchmesser als der Ventilschaft des Dunlopventils aufweist. Bekannte Systeme, die sich für alle drei Ventiltypen eignen, verfügen in der Regel über mehrere Pumpenköpfe mit unterschiedlichen Öffnungen oder sie lassen sich durch den Austausch von Verbindungssystemen, sogenannten Ventiladaptern, die am Pumpenkopf befestigt werden können, für jeweils einen anderen Ventiltyp umbauen. Aus der Praxis sind beispielsweise Pumpen für Schraderventile bekannt, die mit Adapterstücken geliefert werden, die auch die Verwendung mit Dunlop- und Prestaventilen ermöglichen. Die Verwendung derartiger Adaptersysteme, die auf mehrere Austauschadapter angewiesen sind, erweist sich in der Praxis jedoch als nachteilig. Zum Einen ist die Verwendung von Wechseladaptern unkomfortabel. Vor allem ungeübte Benutzer sind häufig nicht in der Lage, auf Anhieb zu erkennen, welches Adapterstück für welche Ventilart geeignet ist. Zum Anderen ist der ständige Wechsel der Adapterstücke an der Druckluftquelle mit einem Verschleiß der Adapterstücke verbunden, beispielsweise kann die Verbindung zwischen Gasauslass der Druckluftquelle und dem Adapter durch den ständigen Wechsel der Adapterstücke verschleißen und die Dichtheit der Verbindung gefährden. GB-A-2297592 offenbart den Oberbegriff des Anspruchs 1.

Es ist daher Aufgabe der vorliegenden Erfindung, eine Verbindungsvorrichtung zum Verbinden eines Reifenventils mit einer Druckluftquelle vorzuschlagen, die sowohl mit einem Dunlopventil, als auch mit einem Schraderventil und einem Prestaventil verwendet werden kann. Die Verbindungsvorrichtung sollte im Sinne eines Universaladapters für die drei oben genannten Ventiltypen verwendbar sein, so dass es nicht notwendig ist, verschiedene Adapterstücke zwischen Druckluftquelle und Reifenventil zu schalten.

Die der Erfindung zugrunde liegende Aufgabe wird durch eine Verbindungsvorrichtung zum Verbinden eines Reifenventils eines Druckluftreifens mit einer Druckluftquelle mit den Merkmalen des Anspruchs 1 gelöst. Vorteilhafte Ausführungen der vorliegenden Erfindung sind Gegenstand der Unteransprüche.

Erfindungsgemäß ist vorgesehen, dass die Verbindungsvorrichtung einen Hohlkörper umfasst, der einen Hohlraum ausbildet und der einen Druckluftanschluss für den Anschluss an eine Druckluftquelle aufweist, wobei in dem Hohlraum eine Druckkammer ausgebildet ist, die in Strömungsverbindung mit dem Druckluftanschluss steht. Der Druckluftanschluss dient dazu, Druckluft aus einer Druckluftquelle in die Druckkammer zu leiten. Der Hohlkörper weist eine Ventilaufnahme auf, in die der Ventilschaft des jeweiligen Reifenventils mit seinem freien Ende voran in einer ersten Richtung entlang einer Achse eingeführt, beispielsweise eingesteckt, werden kann, wobei die Ventilaufnahme eine an dem Hohlkörper angeordnete und die Achse umlaufende Dichtung mit einer zentralen Öffnung aufweist, wobei die zentrale Öffnung mit der Ventilaufnahme und der Druckkammer in Strömungsverbindung steht. Die umlaufende Dichtung ist dazu angepasst, mit dem Ventilschaft des entlang der Achse in die Ventilaufnahme eingeführten Reifenventils zusammenzuwirken, um die Druckkammer und den Lufteinlass des Reifenventils druckdicht in Verbindung miteinander zu setzen. In der Druckkammer ist ein relativ zu dem Hohlkörper entlang der Achse verschiebbarer Kolben angeordnet, der durch ein Federelement, also eine elastisch verformbare Einrichtung, in einer zweiten Richtung, entgegengesetzt zur ersten Richtung, in eine erste Stellung derart vorgespannt ist, dass (1.) beim Einführen eines Dunlopventils, in die Ventilaufnahme das freie Ende des eingeführten Dunlopventils in Kontakt mit dem vorderen Ende des Kolbens treten und den Kolben aus der ersten Stellung in die erste Richtung gegen eine Rückstellkraft des Federelements verschieben kann und (2.) beim Einführen eines Prestaventils in die Ventilaufnahme das freie Ende des eingeführten Prestaventils in Kontakt mit dem vorderen Ende des Kolbens treten und den Kolben aus der ersten Stellung in die erste Richtung gegen eine Rückstellkraft des Federelements verschieben kann. Um sicherzustellen, dass der Kolben in die erste Richtung verschoben wird, wenn ein Prestaventil oder ein Dunlopventil eingeführt wird, kann die erste Stellung des Kolben entsprechend eingestellt bzw. gewählt werden, beispielsweise in Relation zu der Ventilaufnahme. Alternativ oder zusätzlich kann die zentrale Öffnung der umlaufenden Dichtung darauf abgestimmt sein, den Kontakt und gemeinsamen Versatz von Kolben und eingeführtem Ventil zu gewährleisten. Der Kolben ist ferner dazu ausgebildet, eine Strömungsverbindung zwischen dem Lufteinlass des in die Ventilaufnahme eingeführten Prestaventils oder des in die Ventilaufnahme eingeführten Dunlopventils und der Drucckammer zu gewährleisten, wenn der Kolben in Kontakt mit dem freien Ende des eingeführten Prestaventils oder des eingeführten Dunlopventils ist. Der Kolben ist weiterhin in der Drucckammer derart verschiebbar angeordnet, dass der Kolben durch Zufuhr von Druckluft von der Druckluftquelle in die zweite Richtung, also in Richtung Reifenventil verschoben werden kann, wobei der Kolben dazu geeignet ist, mit dem Ventilelement eines in die Ventilaufnahme eingeführten Schraderventils zusammenzuwirken und das Ventilelement in eine Öffnungsposition zu schalten, wenn der Kolben durch Zufuhr von Druckluft in die zweite Richtung verschoben wird, wobei der Kolben dazu ausgebildet ist, eine Strömungsverbindung zwischen dem Lufteinlass des Schraderventils und der Druckkammer zu gewährleisten, wenn der Kolben das Ventilelement in die Öffnungsposition geschaltet hat.

Mit der erfindungsgemäßen Verbindungsvorrichtung können Reifen und Schläuche oder sonstige mittels Luft- oder Gasdruck zu befüllende Gegenstände, die über ein Dunlopventil (z.B. ein Dunlopventil mit einem Gummischlauch als Ventilelement oder ein als Blitzventil bekanntes Dunlopventil mit eingebautem Rückschlagventil), ein Schraderventil oder ein Prestaventil verfügen, befüllt werden, ohne dass es weiterer Adapter für die Druckluftquelle (z.B. eine elektrische Luftpumpe) bedarf. Das macht insbesondere das Befüllen von Druckluftreifen mit unterschiedlichen Ventiltypen sicher und komfortabel.

Die Achse entlang derer der Ventilschaft in der Ventilaufnahme aufgenommen wird kann beispielsweise eine Körperachse des Hohlkörpers sein. Man kann die Achse auch als Einführachse oder Steckachse bezeichnen, um zu verdeutlichen, wie das Reifenventil in die Verbindungsvorrichtung eingesetzt wird.

Die Ventilaufnahme dient insbesondere der Verbindung des Ventilschaftes mit dem Hohlkörper. Aus diesem Grunde weist die Ventilaufnahme die umlaufende Dichtung auf. Wenn die Dichtung mit dem Ventilschaft des in der Ventilaufnahme aufgenommenen Reifenventils zusammenwirkt, ist die Verbindung zwischen der Druckkammer und dem Lufteinlass des Ventilelements druckdicht abgedichtet. Mit anderen Worten, die Druckkammer ist im Bereich der Ventilaufnahme gegenüber der Umgebung soweit luftdicht abgedichtet, dass die Druckluft in der Druckkammer nicht nach außen entweicht, sondern in den Lufteinlass, der mit der Druckkammer in Strömungsverbindung steht, strömen kann.

Die umlaufende Dichtung kann beispielweise eine ringartig die Achse umlaufende Dichtung sein. Verschiedene Querschnittsformen der umlaufenden Dichtung sind dabei möglich. Beispielsweise kann die umlaufende Dichtung in Umfangsrichtung gesehen einen runden, flachen, ovalen oder eckigen Querschnitt aufweisen, oder im Querschnitt als V-Dichtring erscheinen.

Die Ventilaufnahme kann als ein offenes Endes des Hohlkörpers gestaltet sein oder als ein Randabschnitt des Hohlkörpers. Die Ventilaufnahme kennzeichnet unter anderem einen Abschnitt, an dem der Ventilschaft mit dem Hohlkörper verbunden wird.

Um eine Strömungsverbindung zwischen der Druckammer und dem Lufteinlass des eingeführten Reifenventils zu gewährleisten, wenn der Kolben in Kontakt mit dem freien Ende des eingeführten Reifenventils ist, kann der Kolben seitliche Schlitze aufweisen, die sich bis zur vorderen Kolbenfläche erstrecken. Dadurch kann auch dann, wenn der Kolben bei einem Dunlopventil auf der vorderen Öffnung des Ventils aufliegt, Druckluft zum Lufteinlass des Dunlopventils strömen, das Ventilelement betätigen und in den Reifen bzw. in den Schlauch strömen. Bei einem Prestaventil strömt die Druckluft primär seitlich im Bereich der Mutter in das Ventil, wobei dieser Bereich nicht vom Kolben verschlossen wird. Um die Strömungsverbindung zwischen dem Lufteinlass eines eingeführten Schraderventils und der Druckkammer zu gewährleisten, kann der Außenumfang des Kolbens mit Hinblick auf den Innenumfang des Ventilschaftes eines Schraderventils auch so gestaltet sein, dass Druckluft seitlich am Kolben vorbei zum Lufteinlass strömen kann, wenn der Kolben das Ventilelement betätigt.

Im Sinne der Erfindung umfasst der Begriff Druckluft auch andere Medien als Luft. Beispielweise kann die vorliegende Erfindung auch verwendet werden, um einen Reifen mit Stickstoff oder anderen Gasen zu befüllen.

Unter den Begriff Ventilschaft fallen bei einem Dunlopventil auch die Überwurfmutter zum Festlegen des Ventileinsatzes oder Teile des Ventileinsatzes bis zur Lufteintrittsöffnung am oberen Ende des Ventileinsatzes. Bei einem Prestaventil umfasst der Begriff Ventilschaft auch Abschnitte eines Ventileinsatzes wenigstens bis zur Lufteintrittsöffnung am oberen Ende des Ventils.

Nach einer weiteren Ausführungsform der Erfindung ist das vordere Ende des Kolbens dazu eingerichtet, beim Einführen eines Prestaventils in die Ventilaufnahme mit einem an dem freien Ende des Prestaventils angeordneten Ventilstößel in Kontakt zu treten, um die Rückstellkraft des Federelements auf den Ventilstößel zu übertragen, wobei das Federelement derart dimensioniert ist, dass die Rückstellkraft das Ventilelement des Prestaventils in eine Öffnungsstellung schalten kann. Bei dieser Ausführungsform kann die Rückstellkraft des Federelements effektiv genutzt werden, um das Ventilelement von seinem Ventilsitz zu lösen und in der Offenstellung zu halten, so dass Druckluft ungehindert durch den Lufteinlass strömen kann. Bei einer weiteren Ausführungsform sind das vordere Ende des Kolbens und/oder das Federelement derart konfiguriert, dass keine Betätigung des Ventilstößels erfolgt, wenn das Reifenventil in Kontakt mit dem Kolben tritt und den Kolben in die erste Richtung bewegt. Zu diesem Zweck kann das vordere Ende des Kolbens beispielsweise eine Aussparung aufweisen, die das vordere Ende des Ventilstößels aufnimmt. Auch kann das Federelement so gewählt werden, dass seine Rückstellkraft so gering ist, dass eine Betätigung des Ventilstößels nicht erfolgt, wenn das Prestaventil den Kolben in die erste Richtung bewegt. Die Betätigung des Ventilelements erfolgt dann über den Luftdruck in der Druckkammer.

Nach einer weiteren Ausführungsform der Erfindung ist die zentrale Öffnung der umlaufenden Dichtung derart dimensioniert, dass das freie Ende eines Dunlopventils bzw. das freie Ende eines Prestaventils durch die zentrale Öffnung hindurch in die Druckkammer eingeführt werden kann, um den Kolben in der ersten Richtung zu verschieben. Mit anderen Worten, die zentrale Dichtung ist so dimensioniert, dass man das freie Ende eines Dunlopventils, als auch das freie Ende eines Prestaventils hindurchführen kann. Ferner kann die umlaufende Dichtung derart dimensioniert sein, dass die umlaufende Dichtung einen Anschlag für das freie Ende des Ventilschaftes eines Schraderventils bereitstellt, um den Einführweg des Schraderventils zu begrenzen, wobei das vordere Ende des Kolbens dazu geeignet ist, durch die zentrale Öffnung der umlaufenden Dichtung hindurch mit dem Ventilelement des Schraderventils zusammenzuwirken. Der Durchmesser der zentralen Öffnung der umlaufenden Dichtung kann dabei größer sein als der Außendurchmesser des Ventilschaftes eines Dunlopventils und eines Prestaventils, während der Durchmesser der zentralen Öffnung gleichzeitig kleiner ist als der Außendurchmesser eines Schraderventils. So kann die umlaufende Dichtung derart gestaltet sein, dass sie bei einem Dunlopventil und bei einem Prestaventils mit der seitlichen Außenwand des Ventilschaftes eine dichtende Verbindung schafft, während sie bei einem Schraderventil mit den Rand der vorderen Öffnung des Ventilschaftes eine dichtende Verbindung schafft, d.h. wenigstens die vordere Kante der Öffnung des Ventilschaftes liegt auf der Dichtung auf. Vorzugsweise ist die Dichtung deart gestaltet, dass sie bei einem Schraderventil auf der vorderen Kante der Öffnung des Ventilschaftes aufliegt und auf der seitlichen Außenwand des Ventilschaftes. Dies ist beispielsweise durch eine V-förmige Ringdichtung realisierbar. Der Kolben wird unter Einfluss der Druckluft in Richtung Ventilelement verschoben, erstreckt sich durch die zentrale Ringdichtung und betätigt das Ventilelement.

Nach einer weiteren Ausführungsform der Erfindung erstreckt sich ein vorderes Ende des Kolbens in der ersten Stellung durch die zentrale Öffnung der umlaufenden Dichtung.

Nach einer weiteren Ausführungsform der Erfindung erstreckt sich das vordere Ende des Kolbens in der ersten Stellung des Kolbens derart durch die zentrale Öffnung hindurch, dass beim Einführen eines Schraderventils in die Ventilaufnahme das freie Ende des Schraderventils in Kontakt mit dem vorderen Ende des Kolbens treten und den Kolben aus der ersten Stellung in die erste Richtung in eine zweite Stellung verschieben kann.

Nach einer weiteren Ausführungsform der Erfindung ist in der zweiten Stellung des Kolbens eine luftdichte Dichtung zwischen der Innenwandung der Druckkammer und der Außenseite des Kolbens ausgebildet, wobei die Innenwandung der Druckkammer und die Außenseite des Kolbens derart ausgebildet sind, dass durch Verschieben des Kolbens mittels Druckluft aus der zweiten Stellung in die zweite Richtung, also um mit dem Ventilelement des Schraderventils zusammenzuwirken und das Ventilelement zu öffnen, eine Strömungsverbindung zwischen dem Druckluftanschluss und der zentralen Öffnung der umlaufenden Dichtung hergestellt wird, wobei die Strömungsverbindung entlang der Außenseite des Kolbens verläuft. Vorzugsweise ist die luftdichte Dichtung so konfiguriert, dass Druckluft von dem Strömungsanschluss erst dann zu der zentralen Öffnung strömen kann, wenn das Ventilelement betätigt wird. Die luftdichte Dichtung kann sich hierzu über eine vorbestimmte Strecke entlang der Verschiebestrecke des Kolbens erstrecken.

Nach einer weiteren Ausführungsform der Erfindung ist vorgesehen, dass die Verbindungsvorrichtung dazu eingerichtet ist, den Einführweg eine Dunlopventils, eines Prestaventils und eines Schraderventils an jeweils einer vordefinierten Position zu begrenzen. Als Mittel zur Begrenzung des Einführwegs können auf den jeweiligen Ventiltyp abgestimmte Stoppeinrichtungen, wie in der Ventilaufnahme ausgebildete Vorsprünge, vorgesehen sein.

Nach einer weiteren Ausführungsform der Erfindung umfasst die Verbindungsvorrichtung ein Gehäuse, in dem der Hohlkörper zumindest teilweise aufgenommen ist, wobei der Hohlkörper entlang der Achse relativ zu dem Gehäuse zwischen einer ersten Position und einer zweiten Position verschiebbar ist.

Nach einer weiteren Ausführungsform der Erfindung weist die Verbindungsvorrichtung eine Verriegelungseinrichtung zum lösbaren Festlegen des Reifenventils an der Verbindungsvorrichtung auf, wobei die Verriegelungseinrichtung aus einer Offenstellung in eine Schließstellung schaltbar ist. Vorzugsweise ist die Verriegelungseinrichtung dazu ausgebildet, in der Schließstellung in ein auf der Außenseite des Ventilschaftes des Reifenventils ausgebildetes Gewinde einzugreifen, um das Reifenventil an der Verbindungsvorrichtung festzulegen.

Nach einer weiteren Ausführungsform der Erfindung umfasst die Verriegelungseinrichtung wenigstens ein Klemmelement, z.B. einen Klemmarm, das z.B. an dem Hohlkörper oder an dem Gehäuse angebracht sein kann, und wobei an dem Hohlkörper und/oder an dem Gehäuse Führungsmittel vorgesehen sind, die das wenigstens eine Klemmelement zwischen der Offenstellung und der Schließstellung schalten, wenn der Hohlkörper relativ zu dem Gehäuse zwischen der ersten Position und der zweiten Position verschoben wird. Nach einer weiteren Ausführungsform der Erfindung umfasst die Verriegelungseinrichtung wenigstens zwei Klemmelemente (z.B. Klemmarme), vorzugsweise ein Paar relativ zueinander beweglicher Klemmelemente. Die Klemmelemente der Verriegelungseinrichtung können an dem Hohlkörper angebracht sein. Die Klemmelemente der Verriegelungseinrichtung können insbesondere federvorgespannte oder elastisch vorgespannte Klemmarme sein. Zur Steuerung der Klemmelemente können an dem Gehäuse Führungsmittel oder Führungsabschnitte ausgebildet sein, entlang derer sich die Klemmelemente bewegen, wenn der Hohlkörper relativ zu dem Gehäuse bewegt wird. Die Führungsabschnitte können insbesondere Vorsprünge aufweisen, die die Klemmelemente aufeinander zu drängen, wenn die Klemmelemente mit den Vorsprüngen in Kontakt treten und sich entlang dieser bewegen.

Nach einer weiteren Ausführungsform der Erfindung sind das Gehäuse und der Hohlkörper deart miteinander gekoppelt, dass durch Aufsetzen der Verbindungsvorrichtung auf ein Reifenventil und durch Bewegen des Gehäuse entlang der Achse in der zweiten Richtung auf das Reifenventil zu, der Hohlkörper relativ zum dem Gehäuse von der ersten Position in der ersten Richtung in die zweite Position verschoben und die Verriegelungseinrichtung in die Schließstellung geschaltet wird. Der Hohlkörper kann diesbezüglich derart dimensioniert sein, dass sich der Hohlkörper auf der Felge, beispielweise eines Fahrradreifens, abstützt. Auch kann die oben beschriebene Begrenzung des Einführwegs des jeweiligen Ventiltyps eine entsprechende Abstützung bereitstellen.

Nach einer weiteren Ausführungsform der Erfindung weist der der Hohlkörper einen Abschnitt auf oder ist mit einem Abschnitt verbunden, der sich in der zweiten Position des Hohlkörpers und in der Schließstellung der Verriegelungseinrichtung von einer äußeren Oberfläche des Gehäuses nach außen erstreckt. Auf diese Weise kann dem Benutzer unmittelbar signalisiert werden, dass die Verbindungsvorrichtung mit dem Reifenventil gekoppelt ist.

Nach einer weiteren Ausführungsform der Erfindung bildet der Abschnitt eine Betätigungsfläche zum Schalten des Hohlkörpers in dem Gehäuse aus der zweiten Position in die erste Position aus. Die Betätigungsfläche kann durch einen Benutzer der Verbindungsvorrichtung verwendet werden, um den Hohlkörper aus der zweiten Position wieder in die erste Position zu schieben und die Verriegelungseinrichtung in die Offenstellung zu schalten und das Ventil freizugeben.

Nach einer weiteren Ausführungsform der Erfindung fluchtet die Oberfläche des Abschnitts in der ersten Position des Hohlkörpers mit der Oberfläche des Gehäuses.

Nach einer weiteren Ausführungsform der Erfindung wird der Abschnitt durch eine mit dem Hohlkörper verbundene Kappe gebildet, wobei die Kappe vorzugsweise einen Abschnitt des Druckraums ausbildet und weiter vorzugsweise ein Widerlager für das Federelement bereitstellt.

Nach einer weiteren Ausführungsform der Erfindung wird das Federelement durch eine Schraubenfeder gebildet, die in der ersten Richtung hinter dem Kolben zwischen dem Kolben und einer Innenwandung des Druckraums angeordnet ist.

Die vorliegende Erfindung wird im Folgenden anhand eines Ausführungsbeispiels und den Zeichnungen näher erläutert. Es zeigen:
- FIG. 1: eine Verbindungsvorrichtung in Explosivdarstellung nach einer ersten Ausführungsform der Erfindung;
- FIG. 2a,b: die Verbindungsvorrichtung aus FIG. 1 in Schnittansichten;
- FIG. 3: die Verbindungsvorrichtung aus FIG. 1 in zum Teil geschnittener Perspektivansicht mit unterschiedlichen Reifenventiltypen;
- FIG. 4: die Verbindungsvorrichtung aus FIG. 3 in Verbindung mit einem eingesetzten Dunlopventil in einer Schnittansicht;
- FIG. 5a,b: die Verbindungsvorrichtung aus FIG. 4 in Schnittansichten;
- FIG. 6: die Verbindungsvorrichtung aus FIG. 3 in Verbindung mit einem eingesetzten Prestaventil in einer Schnittansicht;
- FIG. 7a,b: die Verbindungsvorrichtung aus FIG. 6 in Schnittansichten;
- FIG. 8: die Verbindungsvorrichtung aus FIG. 3 in Verbindung mit einem eingesetzten Schraderventil in einer Schnittansicht; und
- FIG. 9a,b: die Verbindungsvorrichtung aus FIG. 8 in Schnittansichten.

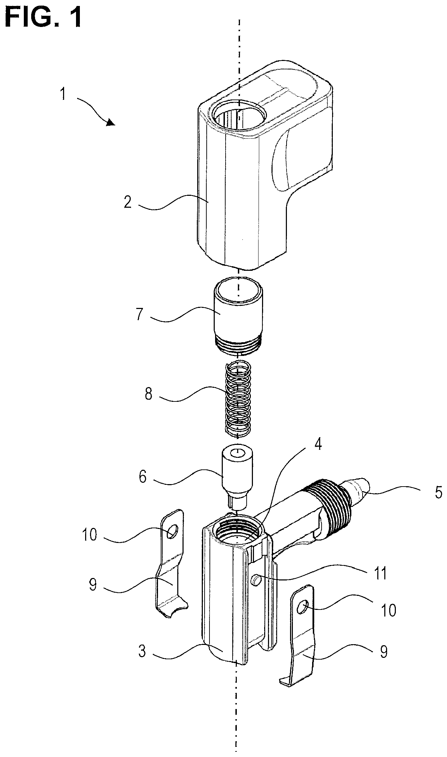

**FIG. 1** zeigt eine Verbindungsvorrichtung 1 nach einer ersten Ausführungsform der Erfindung in Explosivdarstellung.

Die Verbindungsvorrichtung 1 umfasst ein Gehäuse 2, in dem ein Hohlkörper 3 angeordnet ist, der über einen Hohlraum 4 verfügt. Der Hohlraum 4 steht in Strömungsverbindung mit einem Druckluftanschluss 5 des Hohlkörpers 3. Der Druckluftanschluss 5 dient der Verbindung des Hohlraums 4 mit einer Druckluftquelle.

In den Hohlraum 4 ist ein Kolben 6 eingesetzt. In das in FIG. 1 obere Ende des Hohlkörpers 3 ist eine Kappe 7 eingesetzt. Zwischen dem Kolben 6 und der Kappe 7 ist ein Federelement 8 in Form einer Schraubenfeder angeordnet.

Auf von einander abgewandten Außenseiten des Hohlkörpers 3 sind zwei elastisch verformbare Klemmelemente 9 in Form von Klemmarmen angeordnet, deren oberes Ende jeweils über eine Öffnung 10 verfügt, mittels derer die Klemmelemente an Stiften 11 des Hohlkörper 3 angebracht werden. Der Hohlkörper 3 wird zusammen mit den Klemmelementen 9, dem Kolben 6, dem Federelement 8 und der Kappe 7 in das Gehäuse 2 eingesetzt.

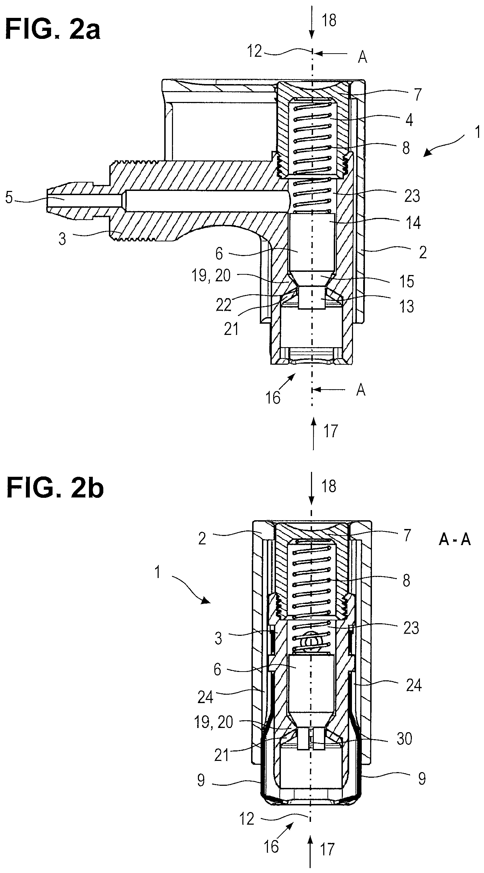

**FIG. 2a und FIG. 2b** zeigen Schnittansichten der zusammengesetzten Verbindungsvorrichtung aus FIG. 1. FIG. 2a zeigt die Verbindungsvorrichtung 1 in einer seitlichen Schnittansicht. FIG. 2b zeigt die Verbindungsvorrichtung im Schnittverlauf A-A.

Der Hohlkörper 3 ist zusammen mit den Klemmelementen 9 und der Kappe 7 entlang einer Achse 12 relativ zu dem Gehäuse 2 verschiebbar. Die Kappe 7 ist mit dem Hohlkörper 3 verschraubt und das Federelement 8 stützt sich an der Innenseite der Kappe 7, die Teil des Hohlraums 4 bildet, ab. Der Kolben 6 ist entlang der Achse 12 relativ zu dem Hohlkörper 3 verschiebbar.

Der Kolben 6 umfasst drei Abschnitte, wobei ein vorderes Ende 13 des Kolbens 6 und ein hinteres Ende 14 des Kolbens 6 durch einen sich zum vorderen Ende 13 des Kolbens hin verjüngenden Abschnitt 15 verbunden sind. Das vordere Ende 13 des Kolbens 6 weist einen geringeren Durchmesser auf als das hintere Ende 14.

Die Verbindungsvorrichtung 1 weist ein unteres offenes Ende 16 auf, das entlang der Achse 12 vor dem Kolben 6 liegt. In das offene Ende 16 wird ein Reifenventil mit seinem freien Ende voran in die Verbindungsvorrichtung in einer ersten Richtung 17 entlang der Achse 12 eingeführt. Die Richtung 18 ist eine zweite Richtung, die entgegengesetzt zur ersten Richtung 17 liegt.

Die Innenwandung des Hohlraums 4 weist einen radial nach innen gerichteten Vorsprung 19 auf, der den Verschiebeweg des Kolbens 6 in der zweiten Richtung 18 begrenzt. Der Kolben 6 wird über das Federelement 8 in die zweite Richtung 18 in eine in FIG. 2a und FIG. 2b gezeigte erste Stellung vorgespannt. In der ersten Stellung liegt der sich verjüngende Abschnitt 15 des Kolbens 6 an dem Vorsprung 19 der Innenwandung des Hohlraums 4 an. Das vordere Ende 13 des Kolbens 6 erstreckt durch den Vorsprung 19 hindurch.

Der Vorsprung 19 bildet eine Ventilaufnahme 20 aus. Die Ventilaufnahme 20 umfasst eine an dem Hohlkörper 3 angebrachte und die Achse 12 umlaufende Dichtung 21, die eine zentrale Öffnung 22 aufweist, durch die sich das vordere Ende 13 des Kolbens 6 in der ersten Stellung erstreckt.

Der Raum oberhalb der Ventilaufnahme 20, also der Raum zwischen der Ventilaufnahme 20 und dem gegenüberliegenden Ende des Hohlkörpers 3 bildet eine Druckkammer 23 aus, die mit dem Druckluftanschluss 5 in Verbindung steht. Die zentrale Öffnung 22 der umlaufenden Dichtung 21 steht in Verbindung mit der Druckkammer 23.

FIG. 2b zeigt am vorderen Ende 13 des Kolbens 6 einen zentralen Schlitz 30, der sich seitlich am vorderen Ende 13 des Kolbens bis zur Vorderfläche des Kolbens erstreckt.

Die Klemmelemente 9 sind an dem Hohlkörper 3 angebracht und zwischen der Außenwandung des Hohlkörpers 3 und der Innenwandung des Gehäuses 2 angeordnet. Die Innenwandung des Gehäuses 2 weist nach innen ragende Vorsprünge 24 als Führungsmittel auf.

FIG. 2a und FIG. 2b zeigen den Hohlkörper 3 in einer ersten Position relativ zu dem Gehäuse 2. Wird der Hohlkörper 3 relativ zu dem Gehäuse 2 entlang der Achse 12 in der ersten Richtung 17 bewegt, interagieren die Klemmelemente 9 mit den Führungsmitteln 24 an der Innenseite des Gehäuses 2. Die Führungsmittel 24 drängen die distalen Enden der Klemmelemente 9 aufeinander zu. Dieser Mechanismus ist Teil einer Verriegelungseinrichtung und dient dazu, die Verbindungsvorrichtung an einem Reifenventil festzulegen.

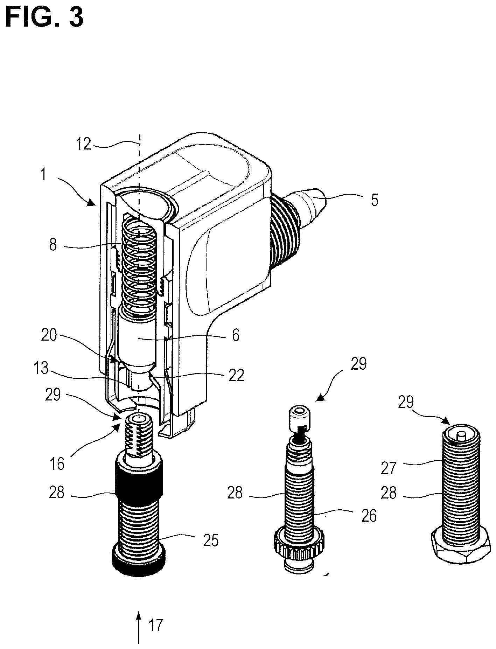

**FIG. 3** zeigt eine zum Teil geschnittene Perspektivansicht der Verbindungsvorrichtung 1 aus der Figur 1 mit drei unterschiedlichen Reifenventiltypen. Bei den dargestellten Reifenventiltypen handelt es sich um ein Dunlopventil 25, ein Prestaventil 26 und ein Schraderventil 27.

Die Verbindungsvorrichtung 1 dient als Universaladapter und ist dazu geeignet, auf jedes der dargestellten Ventile 25, 26, 27 aufgesetzt zu werden und das Ventil mit einer Druckluftquelle, die mit dem Druckluftanschluss 5 verbunden ist, mit Druckluft zu versorgen.

Jedes der Ventile 25, 26, 27 umfasst einen Ventilschaft 28 sowie ein freies Ende 29. In den Ventilschaft 28 ist jeweils ein Ventilelement eingesetzt. Das jeweilige Ventilelement definiert einen Lufteinlass, z.B. zum Befüllen eines Druckluftreifens. Zum Verbinden des jeweiligen Ventils 25, 26 oder 27 mit der Verbindungsvorrichtung 1 wird das Ventil 25, 26 oder 27 entlang der Achse 12 in das untere offene Ende 16 der Verbindungsvorrichtung 1 eingeführt und mit seinem freien Ende 29 voran in der ersten Richtung 17 in die Ventilaufnahme 20 eingeführt.

Wie man anhand der FIG. 3 erkennen kann, erstreckt sich das vordere Ende 13 des Kolbens 6 durch die zentrale Öffnung 22 der umlaufenden Dichtung in der Ventilaufnahme. Wenn das dargestellte Dunlopventil 25 mit seinem freien Ende 29 voran in die Ventilaufnahme 20 eingeführt wird, tritt das freie Ende 29 des eingeführten Dunlopventils 25 in Kontakt mit dem vorderen Ende 13 des Kolbens 6. Der Kolben 6 wird aus der dargestellten ersten Stellung in der ersten Richtung 17 gegen eine Rückstellkraft des Federelements 8 verschoben bis das Dunlopventil 25 in der Ventilaufnahme 20 aufgenommen ist.

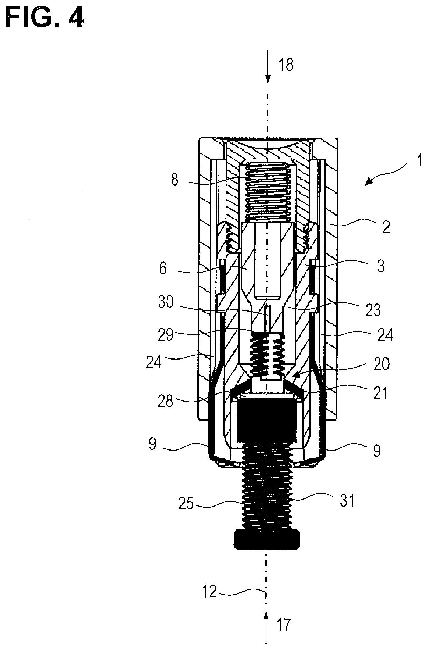

**FIG. 4** zeigt die Verbindungsvorrichtung 1 aus FIG. 3 in Verbindung mit dem in die Ventilaufnahme 20 eingeführten Dunlopventil 25. Durch das Einführen des freien Endes 29 des Dunlopventils 25 wurde der Kolben 6 aus der ersten Stellung entlang der Achse 12 in die erste Richtung 17 verschoben und das Federelement 8 gespannt. Das freie Ende 29 des Dunlopventils 25 mit dem Lufteinlass ist innerhalb der Druckkammer 23 angeordnet. Die umlaufende Dichtung 21 der Ventilaufnahme 20 wirkt mit dem Ventilschaft 28 des Dunlopventils 25 zusammen. Wie in der FIG. 4 zu erkennen ist, wirkt die umlaufende Dichtung 21 in einer Richtung entlang der Achse 12 von oben gegen einen gestuften Abschnitt des Ventilschaftes 28. Weiterhin liegt die umlaufende Dichtung auch seitlich an einem Abschnitt des Dunlopventils 25 an. Durch das Zusammenwirken zwischen der umlaufenden Dichtung 21 und dem Ventilschaft 28 des Dunlopventils 25 werden die Druckkammer 23 und der Lufteinlass des Reifenventils druckdicht in Verbindung miteinander gesetzt.

Das vordere Ende des Kolbens 6 weist den bereits erwähnten Schlitz 30 auf, der eine Strömungsverbindung zwischen dem Lufteinlass des Dunlopventils 25 und der Druckkammer 23 gewährleistet. Wird Druckluft über den Druckluftanschluss in die Druckkammer geleitet, kann diese bis zum Lufteinlass strömen und das Ventilelement öffnen.

Wie bereits erläutert, ist der Hohlkörper 3 relativ zu dem Gehäuse 2 entlang der Achse 12 verschiebbar. FIG. 4 zeigt den Hohlkörper 3 in der ersten Position relativ zu dem Gehäuse 2. In dieser ersten Position erstreckt sich das untere Ende des Hohlkörpers 3 über das untere Ende des Gehäuses 2 hinaus. Die Klemmelemente 9 sind dabei aus dem Gehäuse 2 ausgefahren und befinden sich in einer Offenstellung.

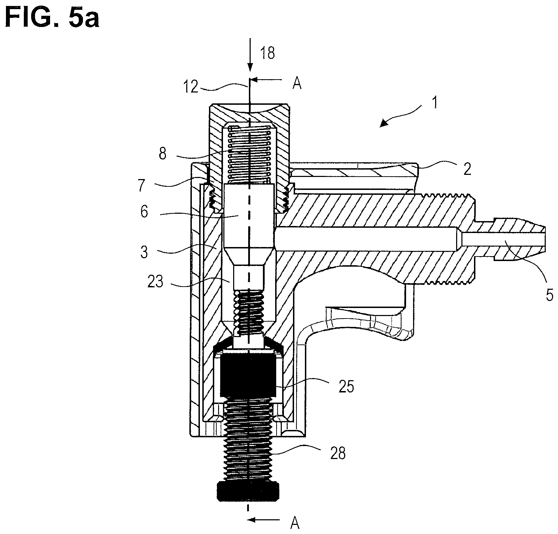

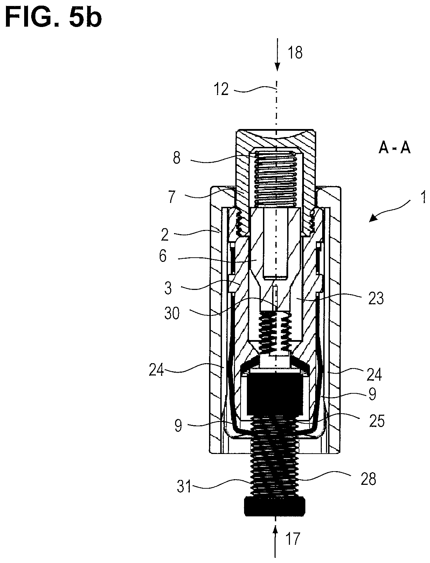

Der Ventilschaft 28 des Dunlopventils 25 weist ein Außengewinde 31 auf. Zum Festlegen des Dunlopventils 25 in der Verbindungsvorrichtung 1 wird das Gehäuse 2 entlang der Achse 12 in der zweiten Richtung 18 relativ zu dem Hohlkörper 3 bewegt, wodurch der Hohlkörper 3 in dem Gehäuse 2 von der ersten Position relativ zum dem Gehäuse 2 in die erste Richtung 17 in eine zweite Position verschoben wird. Infolgedessen interagieren die Klemmelemente 9 mit den auf der Innenseite des Gehäuses 2 ausgebildeten Vorsprüngen (Führungsmitteln) 24 und werden in eine Schließstellung geschaltet. Dieser Zustand ist in FIG. 5 dargestellt.

**FIG. 5a** **und** **FIG. 5b** zeigen die Verbindungsvorrichtung 1 aus der FIG. 4 in Schnittansichten im verriegelten Zustand. FIG. 5a zeigt die Verbindungsvorrichtung 1 in einer seitlichen Schnittansicht. FIG. 5b zeigt die Verbindungsvorrichtung im Schnittverlauf A-A. Das Gehäuse 2 ist relativ zu dem Hohlkörper 3 in der zweiten Richtung 18 bewegt worden ist, um den Hohlkörper 3 in die zweite Position zu fahren und die Verriegelungseinrichtung in die Schließstellung zu schalten. Wie FIG. 5b zeigt, wurden die Klemmelemente 9 durch die Bewegung des Hohlkörpers 3 in dem Gehäuse 2 durch die Führungsmittel 24 nach innen verschwenkt, so dass die distalen Enden der Klemmelemente 9 in Eingriff mit dem Gewinde 31 des Ventilschaftes 28 gebracht wurden. In dieser Schließstellung der Verriegelungseinrichtung ist der Ventilschaft 28 in axialer Richtung relativ zu dem Hohlkörper 3 fixiert.

Die Bewegung des Gehäuses 2 relativ zu dem Hohlkörper 3 hat ferner bewirkt, dass sich die Kappe 7 aus einer oberen Öffnung in dem Gehäuse 2 heraus bewegt hat und von der Oberfläche des Gehäuses 2 vorsteht. Die Kappe 7 signalisiert in dieser Stellung dem Anwender, dass sich die Verbindungsvorrichtung 1 in der Schließstellung befindet und dass die Verbindungsvorrichtung 1 an dem Reifenventil festgelegt ist.

Der Lufteinlass des Dunlopventils 25 steht in Strömungsverbindung mit der Druckkammer 23, die wiederum in Strömungsverbindung mit dem Druckluftanschluss 5 steht. Wird nun Druckluft über den Druckluftanschluss 5 eingeleitet, dann strömt die Druckluft in die Druckkammer 23 und über den Schlitz 30 am vorderen Ende des Kolbens 6 zu dem Ventilelement des Dunlopventils 25. Das Ventilelement des Dunlopventils 25 wird durch den Überdruck geöffnet und die Druckluft kann durch das Ventil strömen.

Zum Lösen der Verbindungseinrichtung 1 von dem Dunlopventil 25 wird das Gehäuse 2 durch den Benutzer festgehalten und die Kappe 7 relativ zu dem Gehäuse 2 nach unten, das heißt in die zweite Richtung 18 gedrückt. Dadurch wird der Hohlkörper 3 relativ zu dem Gehäuse 2 in die erste Position verschoben und die Klemmelemente 9 nehmen wieder die in der Figur 4 dargestellte Position ein. Die Verbindungsvorrichtung kann nun von dem Dunlopventil 25 entfernt werden. Das Federelement 8 drückt dann den Kolben 6 wieder in die erste Stellung.

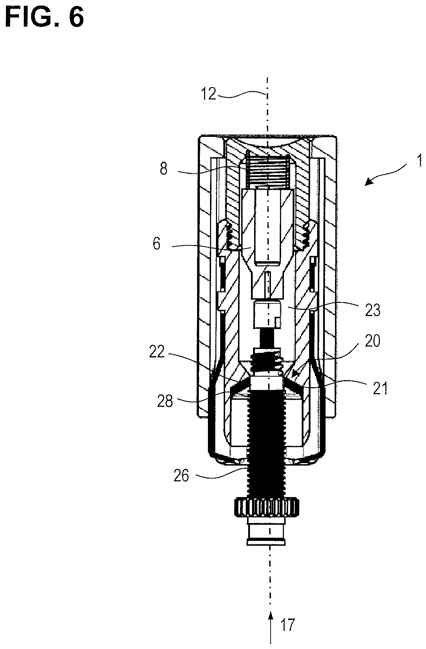

**FIG. 6** zeigt die Verbindungsvorrichtung 1 aus der FIG. 3 in Verbindung mit einem eingesetzten Prestaventil 26 und im unverriegelten Zustand. Wie bei dem oben beschriebenen Dunlopventil, wird das freie Ende des Prestaventils 26 in die Ventilaufnahme 20 eingeführt, wobei das vordere Ende des Prestaventils 26 durch die zentrale Öffnung 22 der umlaufenden Dichtung 21 geführt wird. Dabei tritt das freie Ende des eingeführten Prestaventils 26 in Kontakt mit dem vorderen Ende des Kolbens 6 und der Kolben wird aus der ersten Stellung entlang der Achse 12 in die erste Richtung 17 gegen die Rückstellkraft des Federelements 8 verschoben. Diese Position ist in der FIG. 6 dargestellt.

Die umlaufende Dichtung 21 wirkt mit dem Ventilschaft 28 des Prestaventils 26 zusammen, wodurch die Druckkammer 23 und der Lufteinlass des Prestaventils 26 druckdicht in Verbindung miteinander gesetzt sind.

Bei der in FIG. 6 dargestellten Ausführungsform ist das vordere Ende des Kolbens 6 so ausgestattet, dass es nicht auf den bei Prestaventilen üblichen Ventilstößel drückt. Jedoch kann das vordere Ende des Kolbens auch so ausgestaltet sein, dass das vordere Ende des Kolbens den Ventilstößel betätigt, so dass das Ventilelement des Prestaventils durch die Rückstellkraft des Federelements geöffnet wird. Bei der dargestellten Ausführungsform wird das Ventilelement des Prestaventils durch die in die Druckkammer einzuleitende Druckluft geöffnet.

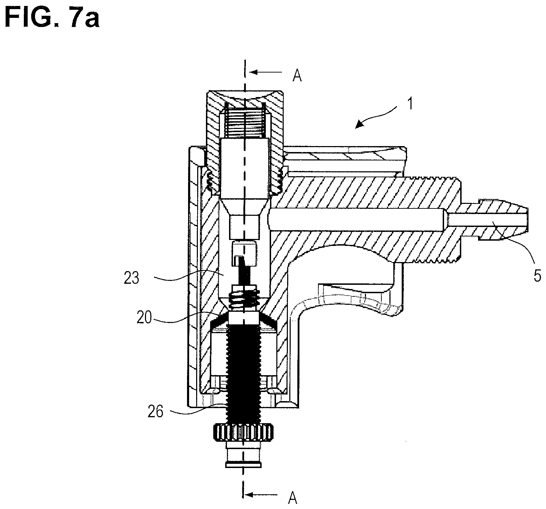

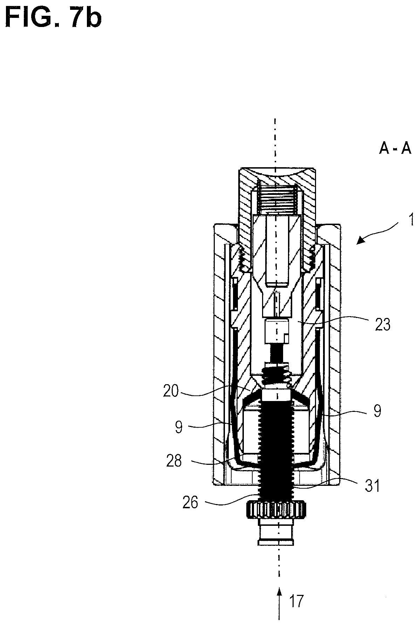

**FIG. 7a** **und** **FIG. 7b** zeigen die Verbindungsvorrichtung 1 aus FIG. 6 in Schnittansichten im verriegelten Zustand. FIG. 7a zeigt die Verbindungsvorrichtung 1 in einer seitlichen Schnittansicht. FIG. 7b zeigt die Verbindungsvorrichtung 1 im Schnittverlauf A-A. Der Verriegelungsmechanismus wurde bereits mit Bezug auf das Dunlopventil erläutert. Auch bei dem gezeigten Prestaventil 26 greifen die Klemmelemente 9 seitlich in das Gewinde 31 des Ventilschaftes 28 ein, um den festen Sitz des Prestaventils 26 in der Ventilaufnahme 20 zu sichern.

Wird Druckluft über den Druckluftanschluss 5 in die gegenüber der Umgebung abgedichtete Druckkammer 23 geleitet, öffnet der Überdruck in der Druckkammer das Ventilelement in dem Prestaventil 26. So kann Druckluft durch das Ventil strömen.

Die Verbindungsvorrichtung wird in gleicher Weise vom dem Prestaventil entfernt, wie es mit Bezug auf das Dunlopventil bereits erläutert wurde.

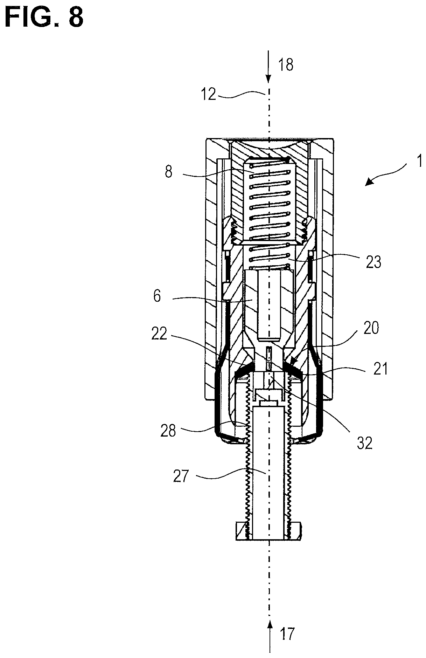

**FIG. 8** zeigt die Verbindungsvorrichtung 1 aus der FIG. 3 in Verbindung mit einem eingesetzten Schraderventil 27 und im unverriegelten Zustand. FIG. 8 zeigt das Schraderventil 27 in einem Zustand, in dem das Schraderventil 27 in die Ventilaufnahme 20 eingesetzt ist, jedoch die Verriegelungseinrichtung noch nicht betätigt wurde. Das Schraderventil 27 besitzt im Vergleich zu dem Dunlopventil und dem Prestaventil einen Ventilschaft 28 mit einem größeren Außendurchmesser.

Die umlaufende Dichtung 21 ist derart dimensioniert, dass sie einen Anschlag für das freie Ende des Ventilschaftes 28 des Schraderventils 27 bereitstellt. Dadurch ist der Einführweg des Schraderventils 27 begrenzt. Wie FIG. 8 zeigt, erstreckt sich das freie Ende des Schraderventils 27 nicht durch die zentrale Öffnung 22 der umlaufenden Dichtung 21 sondern der umlaufende Rand an der vorderen Öffnung des Ventilschaftes 28 liegt in axialer Richtung an der umlaufenden Dichtung 21 an. Auch dadurch ist eine druckdichte Verbindung zwischen der Druckkammer 23 und dem Ventilelement des Schraderventils 27 gewährleistet.

Beim Einführen des Schraderventils 27 in die Ventilaufnahme 20 hat der mittige Ventilstößel 32 des Schraderventils 27 das vordere Ende des Kolbens 6 kontaktiert und diesen aus seiner ersten Stellung, in der der Kolben 6 durch die zentrale Öffnung 22 der umlaufenden Dichtung 21 vorsteht, entlang der Achse 12 in die erste Richtung 17 in eine zweite Stellung verfahren. Die Rückstellkraft des Federelements 8 reicht diesbezüglich nicht aus, das Ventilelement des Schraderventils 27 zu öffnen.

Der Kolben 6 ist derart konfiguriert, dass er durch die Zufuhr von Druckluft in die Druckkammer 23 in die zweite Richtung 18 verschoben werden kann. Das heißt, mittels Druckluft kann der Kolben 6 aus der zweiten Stellung in Richtung erste Stellung verfahren werden, um mit dem Ventilstößel 32 und damit dem Ventilelement des Schraderventils 27 zusammenzuwirken und das Ventilelement in eine Öffnungsposition zu schalten. Zu diesem Zwecke weisen die Innenwandung der Druckkammer 23 und die Außenseite des Kolbens 6 eine Struktur auf, die dazu eingerichtet ist, in der zweiten Stellung des Kolbens 6 eine luftdichte Dichtung aufzubauen. Wird nun Druckluft in die Druckkammer 23 eingeleitet, wirkt diese unmittelbar auf den Kolben 6 und schiebt diesen aus der in FIG. 8 dargestellten zweiten Stellung in Richtung Ventilelement.

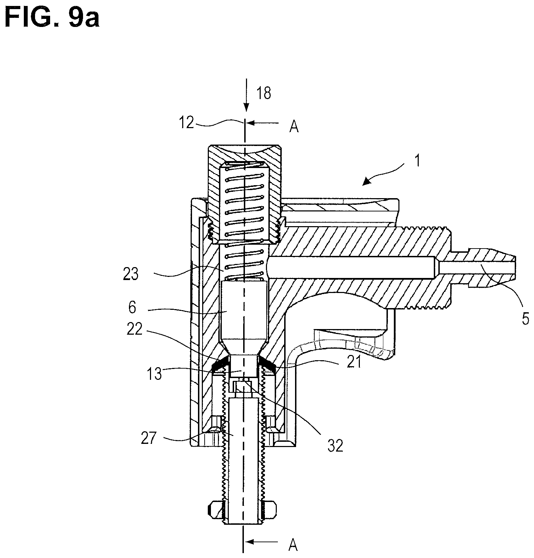

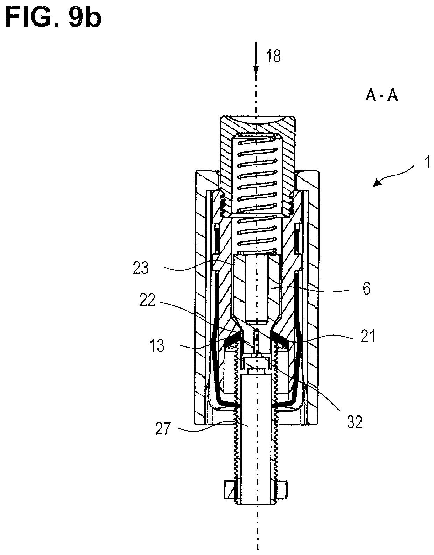

**FIG. 9a** **und** **FIG. 9b** zeigen die Verbindungsvorrichtung 1 aus FIG. 8 im verriegelten Zustand in Schnittansichten. FIG. 9a zeigt die Verbindungsvorrichtung 1 in einer seitlichen Schnittansicht. FIG. 9b zeigt die Verbindungsvorrichtung im Schnittverlauf A-A. Der Verriegelungsmechanismus wurde bereits mit Bezug auf das Dunlopventil erläutert.

Ferner ist der Versatz des Kolbens 6 aus der zweiten Stellung hin zum Ventilstößel des Schraderventils 27 infolge der Zufuhr von Druckluft in die Druckkamer 23 dargestellt. Der Kolben 6 wurde in die zweite Richtung 18 bewegt und hat den Ventilstößel 32 des Schraderventils 27 bewegt, wodurch das Ventilelement des Schraderventils 27 in die Öffnungsstellung geschaltet wurde. Die Dichtstruktur zwischen der Außenwand des Kolbens 6 und der Innenwand der Druckkammer 23 ist so gestaltet, dass dann, wenn das vordere Ende 13 des Kolbens 6 das Ventilelement in die Öffnungsstellung schaltet, eine Strömungsverbindung zwischen dem Druckluftanschluss 5 und der zentralen Öffnung 22 der umlaufenden Dichtung 21 hergestellt wird. Die Strömungsverbindung verläuft dabei entlang der Außenseite des Kolbens 6. Das vordere Ende 13 des Kolbens ist so ausgestaltet, dass die Druckluft an der Außenseite des vorderen Endes 13 des Kolbens 6 vorbei in den Lufteinlass des Schraderventils 27 strömen kann.

Die Verbindungsvorrichtung wird in gleicher Weise vom dem Prestaventil entfernt, wie es mit Bezug auf das Dunlopventil bereits erläutert wurde.

### Bezugszeichenliste

- 1: Verbindungsvorrichtung
- 2: Gehäuse
- 3: Hohlkörper
- 4: Hohlraum
- 5: Druckluftanschluss
- 6: Kolben
- 7: Kappe
- 8: Federelement
- 9: Klemmelement
- 10: Öffnung
- 11: Stifte
- 12: Achse
- 13: vorderes Ende des Kolbens
- 14: hinteres Ende des Kolbens
- 15: verjüngender Abschnitt des Kolbens
- 16: offenes Ende
- 17: erste Richtung
- 18: zweite Richtung
- 19: Vorsprung
- 20: Ventilaufnahme
- 21: Dichtung
- 22: Zentrale Öffnung
- 23: Druckkammer
- 24: Führungsmittel
- 25: Dunlopventil
- 26: Prestaventil
- 27: Schraderventil
- 28: Ventilschaft
- 29: freies Ende
- 30: Schlitz
- 31: Außengewinde
- 32: Ventilstößel Schraderventil

## Patentansprüche

1. Verbindungsvorrichtung (1) zum Verbinden eines Reifenventils eines Druckluftreifens mit einer Druckluftquelle, wobei das Reifenventil wahlweise ein Dunlopventil (25), ein Schraderventil (27) oder ein Prestaventil (26) ist, die jeweils einen Ventilschaft (28) umfassen, in dem ein Ventilelement aufgenommen ist, das einen Lufteinlass definiert,
wobei die Verbindungsvorrichtung einen Hohlkörper (3) umfasst, der einen Hohlraum (4) ausbildet und der einen Druckluftanschluss (5) für den Anschluss an eine Druckluftquelle aufweist, wobei in dem Hohlraum (4) eine Drucckammer (23) ausgebildet ist, die in Strömungsverbindung mit dem Druckluftanschluss (5) steht,
wobei der Hohlkörper (3) eine Ventilaufnahme (20) aufweist, in die der Ventilschaft (28) des Reifenventils mit seinem freien Ende (29) voran in einer ersten Richtung (17) entlang einer Achse (12) eingeführt werden kann,
wobei die Ventilaufnahme (20) eine an dem Hohlkörper (3) angeordnete und die Achse (12) umlaufende Dichtung (21) mit einer zentralen Öffnung (22) aufweist, wobei die zentrale Öffnung (22) mit der Ventilaufnahme (20) und der Druckkammer (23) in Verbindung steht,
wobei die umlaufende Dichtung (21) dazu angepasst ist, mit dem Ventilschaft (28) des entlang der Achse (12) in die Ventilaufnahme (20) eingeführten Reifenventils (25,26,27) zusammenzuwirken, um die Druckkammer (23) und den Lufteinlass des Reifenventils (25,26,27) druckdicht in Verbindung miteinander zu setzen,
**dadurch gekennzeichnet, dass** in der Druckkammer (23) ein relativ zu dem Hohlkörper (3) entlang der Achse (12) verschiebbarer Kolben (6) angeordnet ist, der durch ein Federelement (8) in einer zweiten Richtung (18), entgegengesetzt zur ersten Richtung (17), in eine erste Stellung derart vorgespannt ist, dass beim Einführen eines Prestaventils (26) oder beim Einführen eines Dunlopventils (25) in die Ventilaufnahme (20) das freie Ende (29) des eingeführten Reifenventils (25,26) in Kontakt mit dem vorderen Endes (13) des Kolbens (6) treten und den Kolben (6) aus der ersten Stellung in die erste Richtung (17) gegen eine Rückstellkraft des Federelements (8) verschieben kann,
wobei der Kolben (6) dazu ausgebildet ist, eine Strömungsverbindung zwischen dem Lufteinlass des eingeführten Prestaventils (26) oder Dunlopventils (25) und der Drucckammer (23) zu gewährleisten, wenn der Kolben (6) in Kontakt mit dem freien Ende (29) des eingeführten Prestaventils (26) oder Dunlopventils (25) ist; und
wobei der Kolben (6) in der Druckammer (23) ferner derart verschiebbar angeordnet ist, dass der Kolben (6) durch Zufuhr von Druckluft in die zweite Richtung (18) verschoben werden kann, wobei der Kolben (6) dazu geeignet ist, mit dem Ventilelement eines in die Ventilaufnahme (20) eingeführten Schraderventils (27) zusammenzuwirken und das Ventilelement in eine Öffnungsposition zu schalten, wenn der Kolben (6) durch Zufuhr von Druckluft in die zweite Richtung (18) verschoben wird,
wobei der Kolben (18) dazu ausgebildet ist, eine Strömungsverbindung zwischen dem Lufteinlass des Schraderventils (27) und der Druckkammer (23) zu gewährleisten, wenn der Kolben (6) das Ventilelement in die Öffnungsposition geschaltet hat.

2. Verbindungsvorrichtung nach Anspruch 1,
wobei das vordere Ende (13) des Kolbens (6) dazu eingerichtet ist, beim Einführen eines Prestaventils (26) in die Ventilaufnahme (20) mit einem an dem freien Ende des Prestaventils (26) angeordneten Ventilstößel in Kontakt zu treten, um die Rückstellkraft des Federelements (8) auf den Ventilstößel zu übertragen, wobei das Federelement (8) derart dimensioniert ist, dass die Rückstellkraft das Ventilelement des Prestaventils (26) in eine Öffnungsstellung schalten kann.

3. Verbindungsvorrichtung nach Anspruch 1 oder 2,
wobei die zentrale Öffnung (22) der umlaufenden Dichtung (21) derart dimensioniert ist, dass das freie Ende (29) eines Dunlopventils (25) und eines Prestaventils (26) durch die zentrale Öffnung (22) hindurch in die Druckkammer (23) eingeführt werden kann, um den Kolben (6) in der ersten Richtung (17) zu verschieben; und
wobei die umlaufende Dichtung (21) derart dimensioniert ist, dass die umlaufende Dichtung (21) einen Anschlag für das freie Ende (29) des Ventilschaftes (28) eines Schraderventils (27) bereitstellt, um den Einführweg des Schraderventils (27) zu begrenzen, und wobei das vordere Ende (13) des Kolbens (6) dazu geeignet ist, durch die zentrale Öffnung (22) der umlaufenden Dichtung (21) hindurch mit dem Ventilelement des Schraderventils (27) zusammenzuwirken.

4. Verbindungsvorrichtung nach einem der vorhergehenden Ansprüche, wobei sich ein vorderes Ende (13) des Kolbens (6) in der ersten Stellung durch die zentrale Öffnung (22) der umlaufenden Dichtung (21) erstreckt.

5. Verbindungsvorrichtung nach Anspruch 4,
wobei sich das vordere Ende (13) des Kolbens (6) in der ersten Stellung derart durch die zentrale Öffnung (22) erstreckt, dass beim Einführen eines Schraderventils (27) in die Ventilaufnahme (20) das freie Ende (29) des Schraderventils (27) in Kontakt mit dem vorderen Ende (13) des Kolbens (6) treten und den Kolben (6) aus der ersten Stellung in die erste Richtung (17) in eine zweite Stellung verschieben kann.

6. Verbindungsvorrichtung nach Anspruch 5,
wobei in der zweiten Stellung des Kolbens (6) eine luftdichte Dichtung zwischen der Innenwandung der Druckkammer (23) und der Außenseite des Kolbens (6) vorgesehen ist,
wobei die Innenwandung der Druckkammer (23) und die Außenseite des Kolbens (6) derart ausgebildet sind, dass durch Verschieben des Kolbens (6) mittels Druckluft aus der zweiten Stellung in die zweite Richtung (18) eine Strömungsverbindung zwischen dem Druckluftanschluss (5) und der zentralen Öffnung (22) der umlaufenden Dichtung (21) hergestellt wird, wobei die Strömungsverbindung entlang der Außenseite des Kolbens (6) verläuft.

7. Verbindungsvorrichtung nach einem der vorhergehenden Ansprüche,
wobei die Verbindungsvorrichtung dazu eingerichtet ist, den Einführweg eine Dunlopventils (25), eines Prestaventils (26) und eines Schraderventils (27) an jeweils einer vordefinierten Position zu begrenzen.

8. Verbindungsvorrichtung nach einem der vorhergehenden Ansprüche,
wobei die Verbindungsvorrichtung ein Gehäuse (2) umfasst, in dem der Hohlkörper (3) zumindest teilweise aufgenommen ist, wobei der Hohlkörper (3) entlang der Achse (12) relativ zu dem Gehäuse (2) zwischen einer ersten Position und einer zweiten Position verschiebbar ist.

9. Verbindungsvorrichtung nach einem der vorhergehenden Ansprüche,
wobei die Verbindungsvorrichtung eine Verriegelungseinrichtung (9) zum lösbaren Festlegen des Reifenventils (25, 26, 27) an der Verbindungsvorrichtung (1) aufweist,
wobei die Verriegelungseinrichtung aus einer Offenstellung in eine Schließstellung schaltbar ist, wobei die Verriegelungseinrichtung (9) dazu ausgebildet ist, in der Schließstellung in ein auf der Außenseite des Ventilschaftes (28) des Reifenventils (25,26,27) ausgebildetes Gewinde (31) einzugreifen, um das Reifenventil (25,26,27) an der Verbindungsvorrichtung (1) festzulegen.

10. Verbindungsvorrichtung nach Anspruch 8 und Anspruch 9,
wobei die Verriegelungseinrichtung wenigstens ein Klemmelement (9) umfasst, und wobei an dem Hohlkörper (3) und/oder an dem Gehäuse (2) Führungsmittel (24) vorgesehen sind, die das wenigstens eine Klemmelement (9) zwischen der Offenstellung und der Schließstellung schalten, wenn der Hohlkörper (3) relativ zu dem Gehäuse (2) zwischen der ersten Position und der zweiten Position verschoben wird.

11. Verbindungsvorrichtung nach Anspruch 9 oder Anspruch 10,
wobei das Gehäuse (2) und der Hohlkörper (3) deart miteinander gekoppelt sind, dass durch Aufsetzen der Verbindungsvorrichtung (1) auf ein Reifenventil (25,26,27) und durch Bewegen des Gehäuse (2) entlang der Achse (12) in der zweiten Richtung (18) auf das Reifenventil (25,26,27) zu, der Hohlkörper (3) relativ zum dem Gehäuse (2) aus der ersten Position in der ersten Richtung (17) in die zweite Position verschoben und die Verriegelungseinrichtung in die Schließstellung geschaltet wird.

12. Verbindungsvorrichtung nach einem der Ansprüche 9 bis 11,
wobei der Hohlkörper (3) einen Abschnitt aufweist oder mit einem Abschnitt (7) verbunden ist, der sich in der zweiten Position des Hohlkörpers (3) und in der Schließstellung der Verriegelungseinrichtung von einer äußeren Oberfläche des Gehäuses (2) nach außen erstreckt, wobei vorzugsweise die Oberfläche des Abschnitts (7) in der ersten Position des Hohlkörpers (3) mit der Oberfläche des Gehäuses (2) fluchtet.

13. Verbindungsvorrichtung nach Anspruch 12,
wobei der Abschnitt (7) eine Betätigungsfläche zum Schalten des Hohlkörpers (3) in dem Gehäuse (2) aus der zweiten Position in die erste Position ausbildet.

14. Verbindungsvorrichtung nach Anspruch 12 oder 13,
wobei der Abschnitt durch eine mit dem Hohlkörper (3) verbundene Kappe (7) gebildet wird, wobei die Kappe (7) vorzugsweise einen Abschnitt des Druckraums (23) ausbildet und weiter vorzugsweise ein Widerlager für das Federelement (8) bereitstellt.

15. Verbindungsvorrichtung nach einem der vorhergehenden Ansprüche,
wobei das Federelement (8) durch eine Schraubenfeder gebildet wird, die in der ersten Richtung (17) hinter dem Kolben (5) angeordnet ist.

## Claims

1. Connecting device (1) for connecting a pneumatic tyre inflation valve to a compressed air source, wherein the tyre valve is optionally a Dunlop valve (25), a Schrader valve (27) or a Presta valve (26), each of which comprising a valve stem (28) in which a valve element is received defining an air inlet,
wherein the connecting device comprises a hollow body (3) in which a hollow space (4) is formed and which comprises a compressed air connection for connection to a compressed air source, wherein in the hollow space (4) a pressure chamber (23) is formed which is in flow communication with the compressed air connection (5),
wherein the hollow body (3) comprises a valve receptacle (20) into which the valve stem (28) of the tyre valve can be inserted with its free end (29) leading in a first direction (17) along an axis (12),
wherein the valve receptacle (20) comprises a sealing (21) with a central opening (22), which sealing (21) is disposed in the hollow body (3) and encircles the axis (12), wherein the central opening (22) is connected to the valve receptacle (20) and to the pressure chamber (23),
wherein the encircling sealing (21) is arranged to cooperate with the valve stem (28) of the tyre valve (25, 26, 27) which is inserted along the axis (12) into the valve receptacle (20) in order to connect the pressure chamber (23) and the air inlet of the tyre valve (25, 26, 27) in an airtight manner with each other,
**characterized in that** a piston (6) is disposed in the pressure chamber (23) which is displaceable along the axis (12) relative to the hollow body (3), which displaceable piston (6) is biased by a spring element (8) in a second direction (18) opposite to the first direction (17) into a first position in such a manner that upon insertion of the Presta valve (26) or insertion of the Dunlop valve (25) into the valve receptacle (20) the free end (29) of the inserted tyre valve (25, 26) gets in contact with the front end (13) of the piston (6) and can displace the piston (6) from the first position in the first direction (17) against the return force of the spring element (8),
wherein the piston (6) is configured to provide for flow communication between the air inlet of the inserted Presta valve (26) or Dunlop valve (25) and the pressure chamber (23) when the piston (6) is in contact with the free end (29) of the inserted Presta valve (26) or Dunlop valve (25), and
wherein the piston (6) is disposed in the pressure chamber (23) to be further displaceable in such a manner that the piston (6) can be displaced in the second direction (18) by the supply of compressed air in the second direction (18),
wherein the piston (6) is configured to cooperate with the valve element of a Schrader valve (27) inserted into the valve receptacle (20) and to place the valve element to an opening position when the piston (6) is displaced in the second direction (18) by the supply of compressed air,
wherein the piston (18) is configured to provide flow communication between the air inlet of the Schrader valve (27) and the pressure chamber (23) when the piston (6) has placed the valve element to the opening position.

2. Connecting device according to claim 1,
wherein the front end (13) of the piston (6) is configured, upon insertion of a Presta valve (26) into the valve receptacle (20), to get in contact with a valve tappet disposed on the free end of the Presta valve (26) in order to transmit the return force of the spring element (8) to the valve tappet, wherein the spring element (8) is dimensioned such that the return force can place the valve element of the Presta valve (26) in an opening position.

3. Connecting device according to claim 1 or 2,
wherein the central opening (22) of the encircling sealing (21) is dimensioned such that the free end (29) of a Dunlop valve (25) and of a Presta valve (26) can be inserted through the central opening (22) into the pressure chamber (23) in order to displace the piston in the first direction (17); and
wherein the encircling sealing (21) is dimensioned such that the encircling sealing (21) provides a stop for the free end (29) of the valve stem (28) of a Schrader valve (27) to limit the insertion path of the Schrader valve (27), and wherein the front end (13) of the piston (6) is suitable for cooperating with the valve element of the Schrader valve (27) through the central opening (22) of the encircling sealing (21).

4. Connecting device according to any of the preceding claims, wherein in the first position the front end (13) of the piston (6) extends through the central opening (22) of the encircling sealing.

5. Connecting device according to claim 4,
wherein in the first position the front end (13) of the piston extends through the central opening (22) in such a manner that upon insertion of a Schrader valve (27) into the valve receptacle (20) the free end (29) of the Schrader valve (27) gets in contact with the front end (13) of the piston (6) and can displace the piston (6) from the first position in the first direction (17) to the second position.

6. Connecting device according to claim 5,
wherein in the second position of the piston (6) an airtight sealing between the inner wall of the pressure chamber (23) and the outer surface of the piston (6) is provided,
wherein the inner wall of the pressure chamber (23) and the outer surface of the piston (6) are configured such that, upon displacement of the piston (6) by compressed air from the second position in the second direction (18), flow connection between the compressed air connection (5) and the central opening (22) of the encircling sealing (21) is established, wherein the flow connection extends along the outer surface of the piston (6).

7. Connecting device according to any of the preceding claims,
wherein the connecting device is configured to limit the insertion path of a Dunlop valve (25), a Presta valve (26) and a Schrader valve (27) in each case at a predefined position.

8. Connecting device according to any of the preceding claims,
wherein the connecting device comprises a housing (2) in which the hollow body (3) is at least partially received, wherein the hollow body (3) is displaceable along the axis (12) relative to the housing (2) between a first position and a second position.

9. Connecting device according to any of the preceding claims,
wherein the connecting device comprises a locking mechanism (9) for releasably retaining the tyre valve (25, 26, 27) on the connecting device,
wherein the locking mechanism is placeable from an open position into a locking position, wherein the locking mechanism (9) is configured, in the locking position, to engage a thread (31) formed on the outer surface of the valve stem (28) of the tyre valve (25, 26, 27) in order to releasably retain the tyre valve (25, 26, 27) on the connecting device (1).

10. Connecting device according to claim 8 and claim 9,
wherein the locking mechanism comprises at least one clamping element (9), and wherein on the hollow body (3) and/or on the housing (2) guiding means (24) are provided which place the clamping element (9) between the opening position and the locking position when the hollow body (3) is displaced relative to the housing (2) between the first position and the second position.

11. Connecting device according to claim 9 or claim 10,
wherein the housing (2) and the hollow body (3) are coupled to each other in such a manner that upon placing the connecting device (1) onto a tyre valve (25, 26, 27) and by moving the housing (2) along the axis (12) in the second direction (18) towards the tyre valve (25, 26, 27), the hollow body is displaced relative to the housing (2) from the first position in the first direction (17) to the second position and the locking mechanism is placed in the locking position.

12. Connecting device according to any of the claims 9 to 11,
wherein the hollow body (3) comprises a section or is connected to a section (7) which, in the second position of the hollow body (3) and in the locking position of the locking mechanism, extends from an outer surface of the housing outwardly, wherein preferably the outer surface of the section (7) is, in the first position of the hollow body (3), aligned with the surface of the housing (2).

13. Connecting device according to claim 12,
wherein the section (7) is formed with an actuation surface for placing the hollow body (3) in the housing (2) from the second position to the first position.

14. Connecting device according to claim 12 or 13,
wherein the section is formed by a cap (7) which is connected to the hollow body (3), wherein the cap (7) preferably forms a part of the pressure space (23) and further preferably provides an abutment for the spring element (8).

15. Connecting device according to any of the preceding claims,
wherein the spring element (8) is formed by a coil spring which is disposed, in the first direction (17), behind the piston (5).

## Revendications

1. Dispositif de liaison (1) destiné à relier une valve d'un pneumatique à une source d'air comprimé, la valve de pneu étant au choix une valve Dunlop (25), une valve Schrader (27) ou une valve Presta (26), qui comprennent respectivement une tige de valve (28) dans laquelle est logé un élément de valve qui définit une admission d'air,
le dispositif de liaison comprenant un corps creux (3) qui forme une cavité (4) et qui présente un raccord d'air comprimé (5) pour le raccordement à une source d'air comprimé, une chambre de pression (23) étant réalisée dans la cavité (4) et étant en communication fluidique avec le raccord d'air comprimé (5),
le corps creux (3) présentant un logement de valve (20) dans lequel la tige de valve (28) de la valve de pneu peut être insérée avec son extrémité libre (12) en premier, dans une première direction (17) le long d'un axe (12),
le logement de valve (20) présentant un joint d'étanchéité (21) qui est disposé sur le corps creux (3) et entoure l'axe (12) et est doté d'une ouverture centrale (22), l'ouverture centrale (22) communiquant avec le logement de valve (20) et la chambre de pression (23),
le joint (21) périphérique étant adapté pour coopérer avec la tige de valve (28) de la valve de pneu (25, 26, 27) insérée dans le logement de valve (20), le long de l'axe (12), aux fins de relier entre elles de manière étanche à la pression la chambre de pression (23) et l'admission d'air de la valve de pneu (25, 26, 27),
**caractérisé en ce que**
il est prévu dans la chambre de pression (23), un piston (6) qui peut être déplacé par rapport au corps creux (3), le long de l'axe (12), et qui est mis sous précontrainte par un élément ressort (8), dans une deuxième direction (18) opposée à la première direction (17), vers une première position, de manière à ce que, lors de l'insertion d'une valve Presta (26) ou lors de l'insertion d'une valve Dunlop (25) dans le logement de valve (20), l'extrémité libre (29) de la valve de pneu (25, 26, 27) insérée puisse entrer en contact avec l'extrémité avant (13) du piston (6) et puisse déplacer le piston (6) depuis la première position dans la première direction (17), à l'encontre d'une force de rappel de l'élément ressort (8),
le piston (6) étant agencé pour garantir une communication fluidique entre l'admission d'air de la valve Presta (26) ou la valve Dunlop (25) insérée et la chambre de pression (23), lorsque le piston (6) est en contact avec l'extrémité libre (29) de la valve Presta (26) ou de la valve Dunlop (25) insérée; et
le piston (6) étant en outre disposé dans la chambre de pression (23) de manière à pouvoir être déplacé pour que le piston (6) puisse être déplacé dans la deuxième direction (18) par apport d'air comprimé, le piston (6) étant adapté pour coopérer avec l'élément de valve d'une valve Schrader (27) insérée dans le logement de valve (20) et pour faire passer l'élément de valve dans une position d'ouverture lorsque le piston (6) est déplacé dans la deuxième direction (18) par apport d'air comprime,
le piston (18) étant agencé pour garantir une communication fluidique entre l'admission d'air de la valve Schrader (27) et la chambre de pression (23), lorsque le piston (6) a fait passer l'élément de valve dans la position d'ouverture.

2. Dispositif de liaison selon la revendication 1,
dans lequel l'extrémité avant (13) du piston (6) est agencée pour entrer en contact, lors de l'insertion d'une valve Presta (26) dans le logement de valve (20), avec un poussoir de valve disposé sur l'extrémité libre de la valve Presta (26), afin de transmettre la force de rappel de l'élément ressort (8) au poussoir de valve, l'élément ressort (8) étant dimensionné de manière à ce que la force de rappel puisse faire passer l'élément de valve de la valve Presta (26) dans une position d'ouverture.

3. Dispositif de liaison selon la revendication 1 ou 2,
dans lequel l'ouverture centrale (22) du joint (21) périphérique est dimensionnée de manière à ce que l'extrémité libre (29) d'une valve Dunlop (25) et d'une valve Presta (26) puisse être insérée dans la chambre de pression (23) en passant par l'ouverture centrale (22), afin de déplacer le piston (6) dans la première direction (17); et
dans lequel le joint (21) périphérique est dimensionné de manière à ce que le joint (21) périphérique fournisse une butée pour l'extrémité libre (29) de la tige de valve (28) d'une valve Schrader (27), afin de limiter la course d'insertion de la valve Schrader (27), et l'extrémité avant (13) du piston (6) est adaptée pour coopérer avec l'élément de valve de la valve Schrader (27), à travers l'ouverture centrale (22) du joint (21) périphérique.

4. Dispositif de liaison selon une des revendications précédentes, dans lequel une extrémité avant (13) du piston (6) s'étend à travers l'ouverture centrale (22) du joint (21) périphérique, dans la première position.

5. Dispositif de liaison selon la revendication 4,
dans lequel, dans la première position, l'extrémité avant (13) du piston (6) s'étend à travers l'ouverture centrale (22) de manière à ce que lors de l'insertion d'une valve Schrader (27) dans le logement de valve (20), l'extrémité libre (29) de la valve Schrader (27) puisse entrer en contact avec l'extrémité avant (13) du piston (6) et puisse déplacer le piston (6) à partir de la première position dans la première direction (17) pour l'amener dans une deuxième position.

6. Dispositif de liaison selon la revendication 5,
dans lequel il est prévu, dans la deuxième position du piston (6), un joint étanche à l'air entre la paroi intérieure de la chambre de pression (23) et la face externe du piston (6),
dans lequel la paroi intérieure de la chambre de pression (23) et la face externe du piston (6) sont réalisées de manière à ce que, du fait du déplacement du piston (6) au moyen d'air comprimé, à partir de la deuxième position, dans la deuxième direction (18), une communication fluidique soit établie entre le raccord d'air comprimé (5) et l'ouverture centrale (22) du joint (21) périphérique, la communication fluidique s'étendant le long de la face externe du piston (6).

7. Dispositif de liaison selon une des revendications précédentes,
dans lequel le dispositif de liaison est agencé pour limiter la course d'insertion d'une valve Dunlop (25), d'une valve Presta (26) et d'une valve Schrader (27), respectivement dans une position prédéfinie.

8. Dispositif de liaison selon une des revendications précédentes,
dans lequel le dispositif de liaison comprend un boîtier (2) dans lequel le corps creux (3) est logé au moins en partie, le corps creux (3) pouvant être déplacé le long de l'axe (12) par rapport au boîtier (2), entre une première position et une deuxième position.

9. Dispositif de liaison selon une des revendications précédentes,
dans lequel le dispositif de liaison présente un moyen de verrouillage (9) destiné à la fixation amovible de la valve de pneu (25, 26, 27) sur le dispositif de liaison (1),
dans lequel le moyen de verrouillage peut être amené d'une position d'ouverture dans une position de fermeture, le moyen de verrouillage (9) étant agencé pour entrer en prise, dans la position de fermeture, avec un filetage (31) réalisé sur la face externe de la tige de valve (28) de la valve de pneu (25, 26, 27), aux fins de fixer la valve de pneu (25, 26, 27) au dispositif de liaison (1).

10. Dispositif de liaison selon la revendication 8 et la revendication 9, dans lequel le moyen de verrouillage comprend au moins un élément de serrage (9), et dans lequel il est prévu sur le corps creux (3) et/ou sur le boîtier (2), des moyens de guidage (24) qui déplacent l'élément de serrage (9), au nombre d'au moins un, entre la position d'ouverture et la position de fermeture, lorsque le corps creux (3) est déplacé par rapport au boîtier (2), entre la première position et la deuxième position.

11. Dispositif de liaison selon la revendication 9 ou la revendication 10,
dans lequel le boîtier (2) et le corps creux (3) sont couplés l'un à l'autre de manière à ce que, en rapportant le dispositif de liaison (1) sur une valve de pneu (25, 26, 27) et en déplaçant le boîtier (2) le long de l'axe (12) dans la deuxième direction (18) vers la valve de pneu (25, 26, 27), le corps creux (3) est déplacé par rapport au boîtier (2) dans la première direction (17), passant de la première position dans la deuxième position, et le moyen de verrouillage est amené dans la position de fermeture.

12. Dispositif de liaison selon une des revendications 9 à 11,
dans lequel le corps creux (3) présente une partie ou est relié à une partie (7) qui, dans la deuxième position du corps creux (3) et dans la position de fermeture du moyen de verrouillage, s'étend vers l'extérieur depuis une surface extérieure du boîtier (2), la surface de la partie (7) étant de préférence alignée avec la surface du boîtier (2), dans la première position du corps creux (3).

13. Dispositif de liaison selon la revendication 12,
dans lequel la partie (7) forme une surface d'actionnement pour faire passer le corps creux (3) dans le boîtier (2) de la deuxième position dans la première position.

14. Dispositif de liaison selon la revendication 12 ou 13,
dans lequel la partie est constituée d'un capuchon (7) relié au corps creux (3), le capuchon (7) constituant de préférence une partie de la chambre de pression (23) et constituant en outre de préférence une butée pour l'élément ressort (8).

15. Dispositif de liaison selon une des revendications précédentes,
dans lequel l'élément ressort (8) est constitué d'un ressort hélicoïdal qui est disposé derrière le piston (5), dans la première direction (17).
